(19) Europäisches Patentamt
European Patent Office
Office européen des brevets

(11) **EP 3 040 948 B1**

(12) **EUROPEAN PATENT SPECIFICATION**

(45) Date of publication and mention of the grant of the patent:
**09.12.2020 Bulletin 2020/50**

(51) Int Cl.:
***G07C 3/08*** *(2006.01)*

(21) Application number: **15203201.7**

(22) Date of filing: **30.12.2015**

(54) **METHOD OF DETERMINING REMAINING USE TIME OF A DEVICE, AND APPARATUS AND COMPUTER PROGRAM TO IMPLEMENT SUCH A METHOD**

VERFAHREN ZUR BESTIMMUNG DER VERBLEIBENDEN BENUTZUNGSZEIT EINER VORRICHTUNG UND VORRICHTUNG UND COMPUTERPROGRAMM ZUR IMPLEMENTIERUNG SOLCH EINES VERFAHRENS

PROCÉDÉ DE DÉTERMINATION DE LA DURÉE D'UTILISATION RESTANTE D'UN DISPOSITIF ET APPAREIL ET PROGRAMME INFORMATIQUE POUR METTRE EN OEUVRE UN TEL PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2014 CN 201410852715**

(43) Date of publication of application:
**06.07.2016 Bulletin 2016/27**

(73) Proprietor: **Xiaomi Inc.**
**Beijing 100085 (CN)**

(72) Inventors:
• **ZHAO, Ming**
**100085 BEIJING (CN)**
• **LIANG, Yue**
**100085 BEIJING (CN)**
• **HOU, Enxing**
**100085 BEIJING (CN)**

(74) Representative: **Cabinet Beau de Loménie**
**158, rue de l'Université**
**75340 Paris Cedex 07 (FR)**

(56) References cited:
**WO-A1-2012/066453      US-A- 6 036 757**
**US-A1- 2003 070 544**

**Description**

**TECHNICAL FIELD**

The present application relates to the field of apparatus maintenance, and more particularly to a method of determining remaining use time of a device, and to an apparatus and computer program to implement such a method.

**BACKGROUND**

With increasing air pollution, more and more people use an air purifier to improve the air quality in living spaces. As a filter element is a key component of the air purifier, the lifespan of the filter element has become an important factor for the air purifier. With the growth in use time, the filter element of the air purifier gradually wears out. However, many users fail to timely replace the filter because they do not know the remaining use time of the filter element, causing the air purifier not to operate.

US 6,036,757 describes an air purifier including a processor that measures operating time and air speed and provides an indication of remaining life of a filter in the air purifier.

WO2012/066453 describes an air purifier including a processor that monitors the clean air delivery rate (CADR) of the purifier, increases air flow to maintain CADR at a desired level and, when CADR can no longer be maintained at the desired level, generates a warning to the user to replace the filter in the air purifier.

In order to enable the users to timely replace the filter element according to the remaining use time of the filter element, so as to create a good living environment, there is an urgent need for a method of determining the remaining use time of a filter element of an air purifier filter more accurately.

**SUMMARY**

In order to overcome the problem in the prior art, the present invention provides a method of determining remaining use time, and further provides an apparatus and computer program to implement such a method.

According to a first aspect of the present invention, there is provided a computer-implemented method of determining remaining use time of a filter of a target device, said target device being an air purifier, including:

acquiring use information of the target device, which includes power-on/off times and operating levels of the target device, the different operating levels corresponding to different preset air-flow speeds;

determining an average air-flow speed of the target device

according to the use information; and

determining the remaining use time of the filter of the target device according to the average air-flow speed, attribute information of the target device and environment data;

wherein the environment data comprises particle concentration data, and the attribute information comprises total absorption capacity of the target device, the absorption percentage of the target device, and the area of the air contact surface of a filter element of the target device;

the remaining use time of the filter of the target device determined according to the average air-flow speed of the target device, the attribute information of the target device, and the environment data is:

$$t = \frac{MX}{V S \rho}$$

where t is the remaining use time of the filter of the target device, M is the total absorption capacity of the target device determined by the material of the filter element of the target device, X is the absorption percentage of the target device being the degree to which the particles currently entering into the air treated by the target device are absorbed by the target device, V is the average air-flow speed of the target device, S is the area of the air contact surface of the filter element of the target device, and p is the particle concentration data being an average particle concentration data obtained by long-term statistics or statistics gathered during a particular period of time in the climate in a place in which the target device is located;

wherein the determining of an average air-flow speed V of the target device according to the use information includes:

determining a number of use days of the target device based on the dates corresponding to power-on/off times of the target device;

judging whether the number of use days reaches a preset number of use days;

determining a first average air-flow speed according to acquired use information of a plurality of surrounding devices when the number of use days does not does not reach the preset number of use days, the surrounding devices being air purifiers of the same kind as the target device within a designated range of the target device;

determining a second average air-flow speed according to the power-on/off times and the operating levels of the target device when the number of use days reaches the preset number of use days;

when the number of use days does not reach the preset number of use days, determining said first average air-flow speed as said average air-flow speed V of the target device; and

when the number of use days reaches the preset number of use days, determining said second average air-flow speed as said average air-flow speed V of the target device.

In the first aspect, the use information of the surrounding devices includes power-on/off times and operating levels of the surrounding devices; and

the determining of the first average air-flow speed according to use information of the plurality of surrounding devices includes:

determining average air-flow speeds of the respective surrounding devices according to the power-on/off time and the operating levels of the respective surrounding devices; and

determining an average value of the average air-flow speeds of the surrounding devices as the first average air-flow speed.

In combination with the first aspect, in an implementation of the first aspect,

the determining of a second average air-flow speed according to the power-on/off times and the operating levels of the target device includes:

calculating daily average air-flow speeds of the target device according to a daily operating levels and power-on/off time of the target device in the preset number of use days; and

acquiring an average value of the daily average air-flow speeds of the target device in the preset number of use days as the second average air-flow speed.

In combination with the first aspect, in a second possible implementation of the first aspect, after determining the remaining use time of the filter of the target device according to the average air-flow speed of the target device, the attribute information of the target device, and the environment data, the method further includes:

sending prompt information to a control terminal of the target device so that the control terminal performs a prompt according to the prompt information; or,

sending prompt information to the target device so that the target device performs a prompt according to the prompt information.

According to a second aspect of the present invention there is provided an apparatus to determine remaining use time of a filter of a target device, said target device being an air purifier, the apparatus including:

an acquisition module configured to acquire use information and operating levels of a target device, which includes power-on/off time of the target device, the different operating levels corresponding to different preset air-flow speeds;

a first determination module configured to determine an average air-flow speed of the target device according to the use information; and

a second determination module configured to determine the remaining use time of the filter of the target device according to the average air-flow speed, attribute information of the target device and environment data;

wherein the environment data comprises particle concentration data, and the attribute information comprises total absorption capacity of the target device, the absorption percentage of the target device, and the area of the air contact surface of a filter element of the target device;

wherein the second determination module (403) is configured to determine the remaining use time, t, of the filter of the target device according to the following relation:

$$t = \frac{MX}{V\,S\rho}$$

where $t$ is the remaining use time of the filter of the target device, M is the total absorption capacity of the target device determined by the material of the filter element of the target device, X is the absorption percentage of the target device being the degree to which the particles currently entering into the air treated by the target device are absorbed by the target device, V is the average air-flow speed of the target device, S is the area of the air contact surface of the filter element of the target device, and p is the particle concentration data being an average particle concentration data obtained by long-term statistics or statistics gathered during a particular period of time in the climate in a place in which the target device is located;

wherein the first determination module configured to determine an average air-flow speed V of the target device according to the use information includes:

a determination unit configured to determine a number of use days of the target device based on the dates corresponding to power-on/off time of the target device;

a judgment unit configured to judge whether the number of use days reaches a preset number of use days;

a first average-air-flow-speed determination unit configured to determine a first average air-flow speed according to acquired use information of a plurality of surrounding devices when the number of use days does not reach the preset number of use days, the surrounding devices being air purifiers of the same kind as the target device within a designated range of the target device;

a second average-air-flow-speed determination unit configured to determine a second average air-flow speed according to the power-on/off times and the operating levels of the target device when the number of use days reaches the preset number of use days; and

the first determination module is configured, when the number of use days does not reach the preset number of use days, to determine said first average air-flow speed as said average air-flow speed V of the target device and, when the number of use days reaches said preset number of use days, to determine said second average air-flow speed as said average air-flow speed V of the target device.

In the second aspect, the use information of the surrounding devices includes power-on/off time and operating levels of the surrounding devices; and

the first average-air-flow-speed determination unit is further configured to determine average air-flow speeds of the respective surrounding devices according to the power-on/off time and the operating levels of the respective surrounding devices, and to determine an average value of the average air-flow speeds of the surrounding devices as the first average air-flow speed.

In combination with the second aspect, in an implementation of the second aspect,

the second average-air-flow-speed determination unit is configured to calculate daily average air-flow speeds of the target device according to daily operating levels and power-on/off times of the target device in the preset number of use days; and to acquire an average value of the daily average air-flow speeds of the target device in the preset number of use days, as the second average air-flow speed.

In combination with the second aspect, in a second possible implementation of the second aspect, the apparatus further includes:

a prompt module configured to send prompt information to a control terminal of the target device so that the control terminal performs a prompt according to the prompt information; or,

a prompt module configured to send prompt information to the target device so that the target device performs a prompt according to the prompt information.

According to the second aspect of the present invention, the apparatus may comprise:

a processor; and
an instruction executable by the processor to perform the above-mentioned method.

According to a third aspect of the present invention, there is provided a computer program stored on a computer usable medium, comprising instructions to cause an intelligent terminal to implement the above-mentioned method.

The technical solution provided by embodiments of the present invention may include the following advantageous effects:

By acquiring use information of a target device and determining an average air-flow speed of the target device according to the use information, the remaining use time of the target device is thus determined according to the average air-flow speed, attribute information of the target device and environment data. Since the remaining use time of the target device is determined according to some reliable data such as use information of the target device, attribute information of the target device and environment data, the real use state of the device may be reflected more accurately.

It is to be understood that both the foregoing general description and the following detailed description are illustrative and explanatory only and are not restrictive of the invention as claimed.

## BRIEF DESCRIPTION OF THE DRAWINGS

The accompanying drawings, which are incorporated in and constitute a part of this specification, illustrate embodiments consistent with the invention and, together with the description, serve to explain the principles of the present invention.

Fig.1 is a flow chart of a method of determining the remaining use time according to an example embodiment.
Fig.2 is a diagram showing a structure of a filter element of a target device according to an example embodiment.
Fig.3 is a flow chart of a method of determining the remaining use time according to an example embodiment.
Fig.4 is a block diagram of an apparatus of determining the remaining use time according to an example embodiment.
Fig.5 is a block diagram of a first determination module in the apparatus of Fig.4.
Fig.6 is a block diagram of an apparatus of determining the remaining use time according to an example embodiment.
Fig.7 is a structure diagram of a device of determining the remaining use time according to an example embodiment.

## DESCRIPTION OF THE EMBODIMENTS

Reference will now be made in detail to certain embodiments, examples of which are illustrated in the accompanying drawings. The following description refers to the accompanying drawings in which the same numbers in different drawings represent the same or similar elements unless otherwise expressed. The implementations set forth in the following description of example embodiments do not represent all implementations consistent with the invention. Instead, they are merely examples of apparatuses and methods consistent with aspects according to the invention as recited in the appended claims.

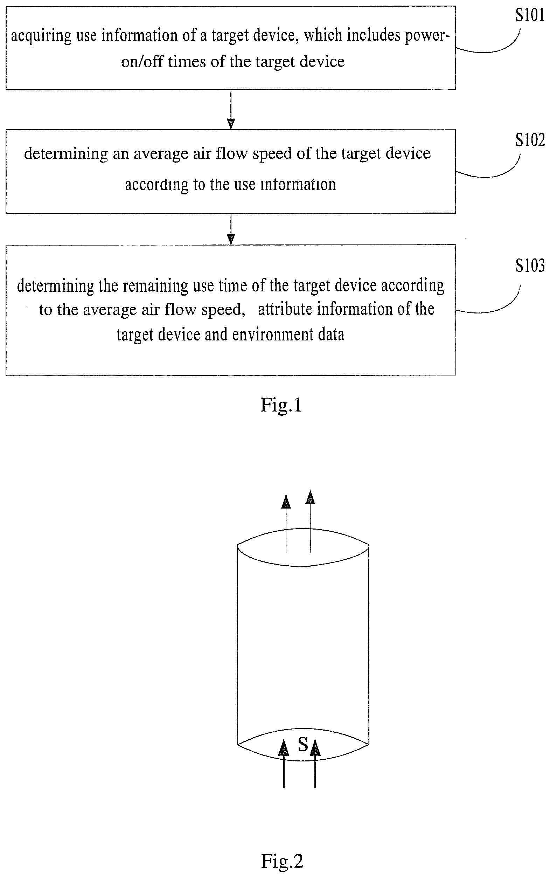

Fig.1 is a flow chart of a method of determining remaining use time according to an example embodiment. As shown in Fig.1, the method of determining the remaining use time is applied in a server, including the following steps.

In step S101, use information of a target device is acquired, which includes power-on/off time of the target device.

In step S102, an average air-flow speed of the target device is determined according to the use information.

In step S103, the remaining use time of the target device is determined according to the average air-flow speed, attribute information of the target device and environment data.

The method of the present embodiment determines the remaining use time of the target device according to the average air-flow speed, attribute information of the target device and environment data by acquiring use information of a target device and determining an average air-flow speed of the target device according to the use information. Since the remaining use time of the target device is determined according to some reliable data such as use information of the target device, attribute information of the target device and environment data, the real use state of the device may be reflected more accurately.

In the present invention, the determining of an average air-flow speed of the target device according to the use information includes:

determining a number of use days of the target device based on the dates corresponding to the power-on/off time of the target device;
judging whether the number of use days reaches a preset number of use days;
acquiring a first average air-flow speed according to use information of a plurality of surrounding devices when the number of use days does not reach the preset number of use days; and
acquiring a second average air-flow speed according to the use information of the target device when the number of use days reaches the preset number of use days.
In the present invention, the use information of the surrounding devices includes power-on/off times and operating levels of the surrounding devices; and
the acquiring of the first average air-flow speed according to use information of the plurality of surrounding devices includes:

determining average air-flow speeds of the respective surrounding devices according to the power-on/off time and the operating levels of the respective surrounding devices; and
acquiring an average value of the average air-flow speeds of the surrounding devices as the first average air-flow speed.

In an embodiment of the present invention, the use information further includes
the acquiring of a second average air-flow speed according to the use information of the target device includes:

calculating daily average air-flow speeds of the target device according to a daily operating level and power-on/off time of the target device in the preset number of use days; and

acquiring an average value of the daily average air-flow speeds of the target device in the preset number of use days as the second average air-flow speed.

In embodiments of the present invention, the environment data includes particle concentration data, and the attribute information includes total absorption capacity of the target device, the absorption percentage of the target device, and the area of the air contact surface of a filter element of the target device. The particle concentration data may be average particle concentration data obtained by long-term statistics or statistics gathered during a particular period of time in the climate in a place in which the target device is located. Alternatively, the period of time may be last week, last month, or the latest three months, etc. The total absorption capacity of the target device is determined by the material of the filter element of the target device, and different materials of the filter element correspond to different total absorption capacities. In order to facilitate the determination of the total absorption capacity of the target device according to different filter elements, the method provided by the present embodiment sets a correspondence relationship between the material of a filter element and the total absorption capacity. As a result, when the material of a filter element of the target device is determined, the total absorption capacity of the target device may be determined by querying the correspondence relationship between the material of the filter element and the total absorption capacity. The absorption percentage of the target device is the degree to which the particles currently entering into the air treated by the target device are absorbed by the target device. For example, if before entering into the target device, the number of particles in the air per unit volume is10000, and after purification, the number of particles in the air per unit volume is 4000, the absorption percentage of the target device is 60%. Taking Fig.2 as an example, the area of the air contact surface of a filter element of the target device is illustrated. Fig.2 shows a filter element of the target device. Fig.2 shows a case where the filter element of the target device is cylindrical, and the direction of the up arrow indicates the direction of the air flow, and thus the area of the air contact surface of a filter element of the target device is the base area of the cylinder in this example.

The remaining use time of the target device determined according to the average air-flow speed of the target device, the attribute information of the target device, and the environment data is:

$$t = \frac{MX}{V S \rho}$$

where **t** is the remaining use time of the target device, M is the total absorption capacity of the target device, X is the absorption percentage of the target device, V is the average air-flow speed of the target device, S is the area of the air contact surface of the filter element of the target device, and p is the particle concentration data.

In an embodiment of the present invention, after determining the remaining use time of the target device according to the average air-flow speed of the target device, the attribute information of the target device, and the environment data, the method further includes:

sending prompt information to a control terminal of the target device so that the control terminal performs a prompt according to the prompt information; or,

sending prompt information to the target device so that the target device performs a prompt according to the prompt information.

The above alternative technical solutions may be combined into alternative embodiments of the present invention in arbitrary combinations which are not itemized here.

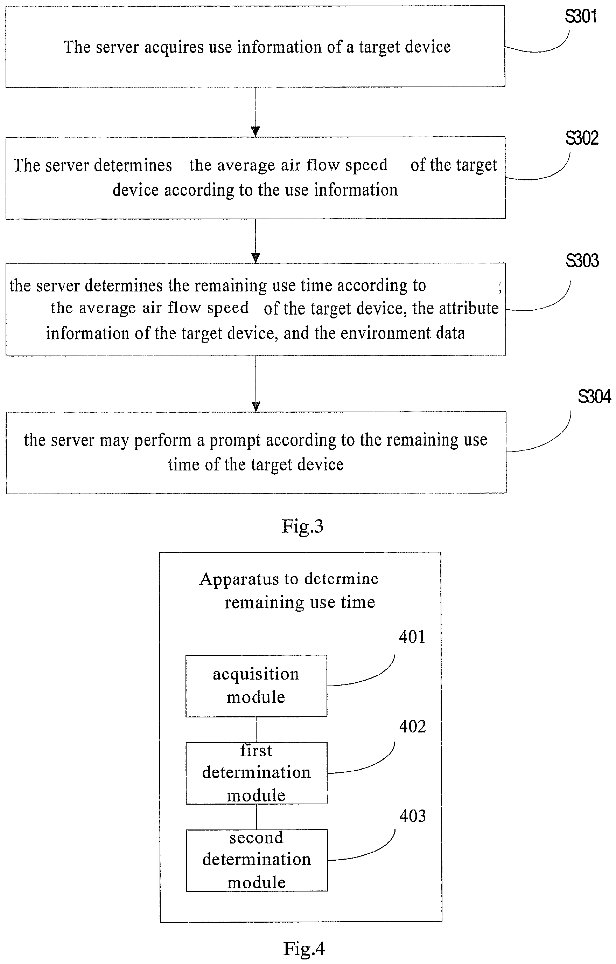

Fig.3 is a flow chart of a method of determining the remaining use time according to an example embodiment. As shown in Fig.3, the method of determining remaining use time is applied in a server, and includes the following steps.

In step S301, the server acquires use information of a target device.

The target device and the surrounding devices involved in embodiments of the present invention are the same kind of device and all of them are air purifiers. The target device is a device for which the remaining use time of its filter will be calculated. The use information of the target device at least includes power-on/off time of the target device, etc.

Since the functions of the server and the target device are different, the process of acquiring the use information by the server may be divided into the following situations.

In an embodiment of the present invention, the target device may have recording and pushing functions, which can automatically record power on and off times, on each occasion that the target device is powered on or off, operating level, and the like, and push the recorded data to the server. The server may have monitoring and storing functions, which can monitor air quality in a place where the target device is located, acquire the environment data indicative of the air quality, and store the data pushed by the target device and the monitored environment data into a storage unit such as memory, flash memory, or the like. Based on the functions of the target device and the server, the server may directly acquire the use information of the target device from the corresponding storage unit.

In another embodiment of the present invention, the target device may also have recording, monitoring, and storing functions, which can automatically record power on and off times, on each occasion that the target device is powered on or off, operating level, and the like, and can also monitor air quality in time periods during which the target device is powered on and off, acquire the environment data indicative of the air quality, and store the acquired data into a storage unit such as memory, flash memory, or the like. The server may have a query function, which can query data in the target device. Based on the functions of the target device and the server, the server may query the use information of the target device from the storage unit of the target device and acquire the queried data when acquiring use information of the target device.

In another embodiment of the present invention, the target device may have recording and pushing functions, which can automatically record power on and off times, on each occasion that the target device is powered on and off, and operating level, and the like, and push the recorded data to a control terminal to be stored. The control terminal may be a terminal bound with the target device, which may be a mobile terminal, personal computer, etc. the server may further have a query function, which can query data from the control terminal. Based on the functions of the target device and the server, the server may query the use information of the target device from the control terminal and acquire the queried data when acquiring use information of the target device.

Of course, the target and the server may further have other functions in addition to the above functions, and the present embodiment does not expatiate any more in that regard. Correspondingly, the server may employ other approaches in addition to the above-mentioned techniques when acquiring use information of the target device and the present description does not itemize such approaches.

In step S302, the server determines the average air-flow speed of the target device according to the use information.

Herein, the air-flow speed of the target device is a speed of air flow generated when the target device is running. The average air-flow speed may be correlated with a deterioration or depletion process of the target device which decides the remaining use lifespan of the target device. Thus, in order to determine the remaining use lifespan of the target device, the method provided by the present embodiment needs firstly to determine the average air-flow speed of the target device. In addition, the use information of the target device can accurately represent the current use situation of the target device. Therefore, in order to improve the accuracy of determining the remaining use time of the target device, in the present embodiment, the server determines the average air-flow speed of the target device according to the use information of the target device.

The server employs the following techniques (1) to (3) when determining the average air-flow speed of the target device according to the use information.

(1) The server determines the number of use days of the target device according to the power-on/off time of the target device.

Herein, the power-on/off time may be power-on timing and power-off timing, and may be also the duration time between the power-on timing and the power-off timing. In all of the present embodiments, the power-on/off time is set as the power-on timing and the power-off timing. In addition, since the power-on/off time of the target device is recorded by the target device many times, in order to manage the recorded power-on/off time, the target device records the date corresponding to the power-on/off time together with the recorded power-on/off time. Thus, based on the date corresponding to the recorded power-on/off time, the server determines the number of use days of the target device.

Taking data recorded in table I as an example, the process of determining the number of use days of the target device according to the power-on/off time by the server is described in detail.

Table I

| Power on and off times | Power-on/off time |
| --- | --- |
| 1 | January 1, 2014 6:00~9:00 |
| 2 | January 4, 2014 12:30~15:30 |
| 3 | January 9, 2014 20:00~21:00 |
| 4 | January 16, 2014 9:00~11:00 |
| 5 | January 17, 2014 10:30~14:00 |
| 6 | January 17, 2014 16:00~19:00 |
| 7 | January 23, 2014 8:00~11:00 |

(continued)

| Power on and off times | Power-on/off time |
| --- | --- |
| 8 | January 23, 2014 7:00~9:30 |
| 9 | January 25, 2014 16:00~21:00 |
| 10 | January 31, 2014 7:00~10:00 |

Based on the power-on/off time recorded in table I, the server may determine the number of use days of the target device, that is, 8 days.

(2) The server judges whether the number of use days reaches a preset number of days.

In this embodiment, as the time that the target device has been in service may vary, the server may employ different calculation methods to calculate the average air-flow speed of the target device. For this reason, in the method provided by this embodiment, before the average air-flow speed of the target device is determined according to the use information of the target device, whether the number of use days reaches a preset number of days is further judged. Herein, the preset number of days may be 20 days, 30 days, 50 days, etc. This embodiment does not put any specific limitation on the preset number of days. Specifically, the server may judge whether the number of use days reaches a preset number of days by comparing the number of use days with the preset number of days.

(3) The server determines the average air-flow speed of the target device according to the comparison result.

When comparing the number of use days with the preset number of days, the comparison result may be either of the following two results: the number of use days does not reach the preset number of days, and the number of use days reaches the preset number of days. As for the two comparison results, the server may determine the average air-flow speed of the target device in the following manner (3.1) to (3.2).

(3.1) when the number of use days does not reach the preset number of days, the server may acquire a first average air-flow speed according to use information of a plurality of surrounding devices.

When the number of use days of the target device does not reach a preset number of use days, this illustrates that the number of use days of the target device is low. Thus, the determined average air-flow speed determined according to the use information of the target device may lack accuracy. In such a case, the server may acquire the first average air-flow speed according to the use information of a plurality of surrounding devices, as the average air-flow speed of the target device.

Herein, the surrounding devices may be devices within a designated range of the target device. The designated range of the target device may cover a region shaped as a circle with the center being at the target device and the radius having a preset length. The preset length may be 1Km (kilometer), 2Km, 3Km, etc. This embodiment does not put any specific limitation on the preset length. The use information of a surrounding device at least includes power-on/off time and operating level of the surrounding device.

Since the devices in this embodiment may access the Internet, when each device acquires location information where the device is located, through the Internet, the device may send the acquired location information to a server. Thus, if it has been determined that reference should be made to surrounding devices, the server may determine which plurality of surrounding devices are within the designated range of the target device according to the received location information. Of course, the server may determine a plurality of surrounding devices within the designated range of the target device according to the IP address of each device. In addition to the above approaches, the server may determine physical delivery addresses corresponding to the target device and other devices from stored consumption records in user's account, and thus may determine a plurality of surrounding devices within the designated range of the target device according to the delivery addresses.

It should be noted that in this embodiment, the operating level of a device may be an "ordinary" level, a "strong" level, a "sleeping" level, etc. When the device is running at different operating levels, the air-flow speeds of the device are different. Herein, the air-flow speed when the device is operating at the "sleeping" level is minimum and may be set as a first speed, the air-flow speed when the device is operating at the "ordinary" level is fairly low and may be set as a second speed, and the air-flow speed when the device is operating at the "strong" level is maximum and may be set as a third speed, where the first speed is smaller than the second speed, and the second speed is smaller than the third speed.

When judging that the number of use days does not reach the preset number of days, the server may acquire a first average air-flow speed according to the use information of a plurality of the surrounding devices in the following ways (3.11)~(3.12).

(3.11) The server determines an average air-flow speed of each surrounding device according to power-on/off times and operating levels of each surrounding device.

Since the storage unit in the server may store use information of all the devices including the target device and the surrounding devices, the server may acquire power-on/off times and operating levels of the surrounding devices from the corresponding storage unit thereof.

Based on the acquired power-on/off times and operating levels of the plurality of surrounding devices, the server may determine the length of the power-on/off time of each surrounding device according to the daily power-on/off time of each surrounding device in a preset number of days, thereafter determine daily air-flow speeds of each surrounding device according to the length of the power-on/off time and corresponding operating level of each surrounding device, and thus acquire an average value of air-flow speeds of each surrounding device in the preset number of days, as the average air-flow speed of each surrounding device.

For example, table II shows use information of a surrounding device A and the length of power-on/off time calculated according to the use information. The air-flow speed corresponding to the "sleeping" operating level is v1(/h), the air-flow speed corresponding to the "ordinary" operating level is v2(/h), and the air-flow speed corresponding to the "strong" operating level is v3(/h).

Table II

| Power on and off times | Power-on/off time | Length of power-on/off time (hour) | Operating level |
|---|---|---|---|
| 1 | January 1, 2014 6:00~9:00 | 3 | Ordinary |
| 2 | January 4, 2014 12:30~15:30 | 3 | Strong |
| 3 | January 9, 2014 20:00~21:00 | 1 | Sleeping |
| 4 | January 16, 2014 9:00~11:00 | 2 | Strong |
| 5 | January 17, 2014 10:30~14:00 | 3.5 | Ordinary |
| 6 | January 17, 2014 16:00~19:00 | 3 | Sleeping |
| 7 | January 23, 2014 8:00~11:00 | 3 | Strong |
| 8 | January 23, 2014 7:00~9:30 | 2.5 | Strong |
| 9 | January 25, 2014 16:00~21:00 | 5 | ordinary |
| 10 | January 31, 2014 7:00~10:00 | 3 | Strong |

Based on the data shown in table II, the server may calculate the average air-flow speed of the surrounding device A , that is, $(3 v_2 + 3 v_3 + 1 v_1 + 2 v_3 + 3.5 v_2 + 3 v_1 + 3 v_3 + 2.5 v_3 + 5 v_2 + 3 v_3)/29 = (4 v_1 + 11.5 v_2 + 10.5 v_3)/29$.

(3.12) the server acquires an average value of average air-flow speeds of the plurality of surrounding devices in a preset number of days, as a first average air-flow speed.

After acquiring the average value of average air-flow speeds of the plurality of surrounding devices, the server may acquire an average value of average air-flow speeds of the plurality of surrounding devices in a preset number of days based on the acquired average value of average air-flow speeds of the plurality of surrounding devices, as the first average air-flow speed.

For example, consider a case where five surrounding devices are acquired by the server: device A, device B, device C, device D, and device E. When the average air-flow speed of device A is $a_1 v_1 + b_1 v_2 + c_1 v_3$, the average air-flow speed of device B is $a_2 v_1 + b_2 v_2 + c_2 v_3$, the average air-flow speed of device C is $a_3 v_1 + b_3 v_2 + c_3 v_3$, the average air-flow speed of device D is $a_4 v_1 + b_4 v_2 + c_4 v_3$, and the average air-flow speed of device E is $a_5 v_1 + b_5 v_2 + c_5 v_3$, the average value of average air-flow speeds of the five surrounding devices is equal to $[(a_1 v_1 + b_1 v_2 + c_1 v_3) + (a_2 v_1 + b_2 v_2 + c_2 v_3) + (a_3 v_1 + b_3 v_2 + c_3 v_3) + (a_4 v_1 + b_4 v_2 + c_4 v_3) + (a_5 v_1 + b_5 v_2 + c_5 v_3)]/5 = [(a_1 + a_2 + a_3 + a_4 + a_5) v_1 + (b_1 + b_2 + b_3 + b_4 + b_5) v_2 + (c_1 + c_2 + c_3 + c_4 + c_5) v_3]/5$.

(3.2) when the number of use days reaches a preset number of use days, the server acquires a second average air-flow speed according to the use information of the target device.

When the number of use days of the target device reaches a preset number of use days, it illustrates that the target device has been in use for a longer period. Thus, the average air-flow speed is more accurately determined according to the use information of the target device. In such a case, the server may acquire the second average air-flow speed according to the use information of the target device, as the average air-flow speed of the target device.

The use information of the target device further includes operating level information. Based on the use information of the target device, the server may employ the following manner (3.21) to (3.22) when acquiring the second average air-flow speed.

(3.21) The server calculates daily average air-flow speeds of the target device according to daily operating levels and power-on/off times of the target device in a preset number of days.

Based on the acquired use information of the target device, the server may determine a length of power-on/off time of the target device according to daily power-on/off times of the target device in the preset number of days, and thereafter, calculate daily average air-flow speeds of the target device according to daily operating levels and the length of power-on/off times of the target device.

For example, table III shows use information of the target device on June 4, 2014 and the length of power-on/off time calculated according to the use information. The air-flow speed corresponding to the "sleeping" operating level is v1(/h), he air-flow speed corresponding to the "ordinary" operating level is v2(/h), and the air-flow speed corresponding to the "strong" operating level is v3(/h).

Table III

| Power on and off times | Power-on/off time | Length of Power-on/off time (hour) | Operating level |
| --- | --- | --- | --- |
| 1 | June 4, 2014 6:00~9:00 | 3 | ordinary |
| 2 | June 4, 2014 12:30~15:30 | 3 | strong |
| 3 | June 4, 2014 20:00~21:00 | 1 | sleeping |

Based on the data shown in table III, the server may calculate the average air-flow speed of the target device on June 4, 2014, that is, (3* v2+3* v3+1* v1) /7.

(3.22) The server acquires an average value of daily average air-flow speeds of the target device in a preset number of days as a second average air-flow speed.

After calculating daily average air-flow speeds of the target device in the preset number of days, the server may acquire an average value of the daily average air-flow speeds of the target device in the preset number of days based on the calculated daily average air-flow speeds of target device in the preset number of days, as the second average air-flow speed.

For example, assuming the preset number of days is set as 30 days, and the daily average air-flow speed of the target device in the preset number of days is: a1 v1+b1 v2+c1 v3, a2 v1+b2 v2+c2v3, a3 v1+b3 v2+c3 v3, ......., a30 v1+b30v2+c130v3, the average value of the daily average air-flow speeds of the target device in the preset number of days is equal to [(a1 v1+b1 v2+c1 v3) +(a2 v1+b2 v2+c2 v3)+(a3 v1+b3 v2+c3 v3)+.....+(a30 v1+b30 v2+c30v3)]/30, that is, the second average air-flow speed is equal to [(a1 v1+b1 v2+c1 v3) +(a2 v1+b2 v2+c2 v3)+(a3 v1+b3 v2+c3 v3)+.....+(a30 v1+b30 v2+c30v3)]/30.

In step S303, the server determines the remaining use time according to the average air-flow speed of the target device, the attribute information of the target device, and the environment data.

The remaining use time of the target device is not only related to the average air-flow speed of the target device but also related to the attribute information of the target device, and the environment data. Thus, in order to improve the accuracy of determining the remaining use time of the target device, the server comprehensively considers the average air-flow speed of the target device, the attribute information of the target device, and the environment data to determine the remaining use time of the target device. Herein, the environment data is an average value obtained by a long-term monitoring of the air quality in a place in which the target device is located, and at least includes particle concentration data and the like. The attribute information at least includes total absorption capacity of the target device, the absorption percentage of the target device, the area of the air contact surface of a filter element of the target device, and the like. The concrete meaning of each parameter in the attribute information may refer to the meaning of the above respective parameters, and so no more details will be repeated.

When determining the remaining use time of the target device according to the average air-flow speed of the target device, the attribute information of the target device, and the environment data, the following equation (1) is employed:

$$t = \frac{MX}{V S \rho}$$

where **t** is the remaining use time of the target device, M is the total absorption capacity of the target device, X is the absorption percentage of the target device, V is the average air-flow speed of the target device, S is the area of the air contact surface of the filter element of the target device, and p is the particle concentration data.

It should be noted that since the environment data where the target device is located is different in different seasons, in order to improve the accuracy of determining the remaining use lifespan, the method provided by this embodiment may make use of statistics generated on the acquired environment data at a preset time interval so as to obtain an average value of the environment data. Thereafter, the remaining use time of the target device may be determined according to the average value of the environment data.

In step S304, the server may perform a prompt according to the remaining use time of the target device.

In order to remind a user of the current state of the target device in due time, and avoid the problem that the target device does not work normally due to no timely replacement, the method provided by the embodiment may perform a prompt according to the remaining use time of the target device after determining the remaining use time of the target device. Specifically, the server may send prompt information to a control terminal of the target device so that that control terminal performs a prompt according to the prompt information. Herein, the prompt information may communicate the remaining use time of the target device. After receiving the prompt information, the control terminal may perform a prompt by displaying the remaining use time in a display interface, and may perform a reminder in the display interface in a flashing prompt manner. Of course, the server may send prompt information to the target device so that the target device performs a prompt according to the prompt information. This embodiment does not place any specific limitation on the manner of giving a prompt.

The method provided by the present invention determines the remaining use time of the target device according to the average air-flow speed, attribute information of the target device and environment data by acquiring use information of a target device and determining an average air-flow speed of the target device according to the use information. Since the remaining use time of the target device is determined according to some reliable data such as use information of the target device, attribute information of the target device and environment data, the real use state of the device may be reflected more accurately, which is more precise in comparison with the user's experience. In addition, after determining the remaining use time of the target device, the server may perform a prompt by sending prompt information, thus reminding users in time, whereby the target device is ensured to work normally.

Fig.4 is a block diagram showing an apparatus for determining remaining use time according to an example embodiment. Referring to Fig.4, the apparatus includes an acquisition module 401, a first determination module 402, and a second determination module 403

The acquisition module 401 is configured to acquire use information of a target device, which includes power-on/off time of the target device.

The first determination module 402 is configured to determine an average air-flow speed of the target device according to the use information.

The second determination module 403 is configured to determine the remaining use time of the target device according to the average air-flow speed, attribute information of the target device and environment data.

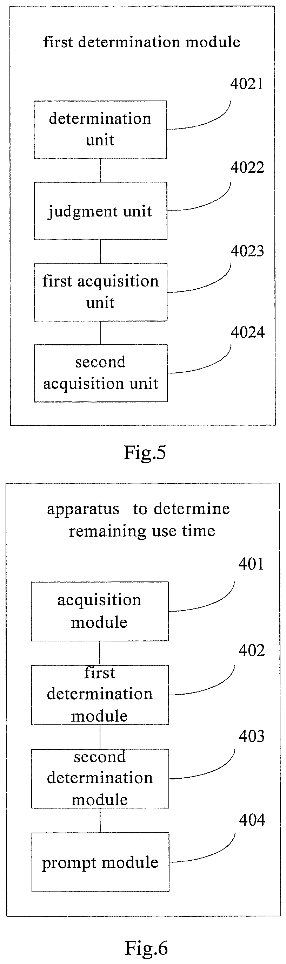

Referring to Fig.5, the first determination module includes a determination unit 4021, a judgment unit 4022, a first acquisition unit 4023, and a second acquisition unit 4024.

The determination unit 4021 is configured to determine a number of use days of the target device according to power-on/off times of the target device.

The judgment unit configured 4022 is to judge whether the number of use days reaches a preset number of use days.

The first acquisition unit 4023 is configured to acquire a first average air-flow speed according to use information of a plurality of surrounding devices when the number of use days does not reach the preset number of use days.

The second acquisition unit 4024 is configured to acquire a second average air-flow speed according to the use information of the target device when the number of use days reaches the preset number of use days.

In the present invention, the use information of the surrounding devices includes power-on/off times and operating levels of the surrounding devices; and

the first acquisition unit 4023 is further configured to determine average air-flow speeds of the respective surrounding devices according to the power-on/off times and the operating levels of the respective surrounding devices, and acquire an average value of the average air-flow speeds of the surrounding devices as the first average air-flow speed.

In the present invention, the use information further includes operating level information; and

the second acquisition unit 4024 is configured to calculate daily average air-flow speeds of the target device according to daily operating levels and power-on/off times of the target device in the preset number of use days; and acquire an average value of the daily average air-flow speeds of the target device in the preset number of use days, as the second average air-flow speed.

In the present invention, the environment data includes particle concentration data, and the attribute information includes total absorption capacity of the target device, the absorption percentage of the target device, and the area of the air contact surface of a filter element of the target device;

The remaining use time of the target device determined by the second determination unit is:

$$t = \frac{MX}{V\,S\rho}$$

where $t$ is the remaining use time of the target device, M is the total absorption capacity of the target device, X is the absorption percentage of the target device, V is the average air-flow speed of the target device, S is the area of the air contact surface of the filter element of the target device, and p is the particle concentration data.

Referring to Fig.6, the apparatus further includes a prompt module 404.

The prompt module 404 is configured to send prompt information to a control terminal of the target device so that the control terminal performs a prompt according to the prompt information; or,

The prompt module 404 is configured to send prompt information to the target device so that the target device performs a prompt according to the prompt information.

The apparatus provided by the present invention determines the remaining use time of the target device according to the average air-flow speed, attribute information of the target device and environment data by acquiring use information of a target device and determining an average air-flow speed of the target device according to the use information. Since the remaining use time of the target device is determined according to some reliable data such as use information of the target device, attribute information of the target device and environment data, the real use state of the device may be reflected more accurately.

With regard to the apparatus in the above embodiment, a detailed description of a specific manner in which respective modules may perform operations has already been presented in connection with the embodiment related to the method, and so no further detailed description will be given.

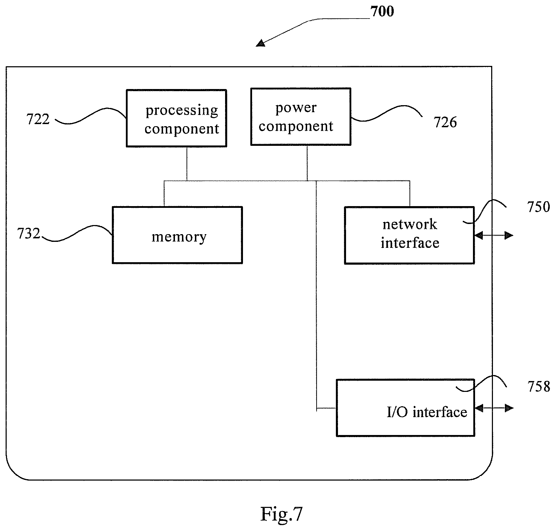

Fig.7 is a structure diagram showing a device for determining remaining use time according to an exemplary embodiment. As shown in Fig. 7, the device 700 includes a processing component 722 that further includes one or more processors, and memory resources represented by a memory 732 for storing instructions, such as application programs, executable by the processing component 722. The application programs stored in memory 732 may include one or more modules, each of which corresponds to a set of instructions. Moreover, the processing component 722 is configured to execute instructions for performing the following method of determining remaining use time of a filter of a target device, said target device being an air purifier:

acquiring use information of a target device, which comprises power-on/off times of the target device, the different operating levels corresponding to different preset air-flow speeds;
determining an average air-flow speed of the target device according to the use information; and
determining the remaining use time of the filter of the target device according to the average air-flow speed, attribute information of the target device and environment data.

In the present invention, the environment data comprises particle concentration data, and the attribute information comprises total absorption capacity of the target device, the absorption percentage of the target device, and the area of the air contact surface of a filter element of the target device; the remaining use time of the filter of the target device determined according to the average air-flow speed of the target device, the attribute information of the target device, and the environment data is:

$$t = \frac{MX}{V\,S\rho}$$

where t is the remaining use time of the filter of the target device, M is the total absorption capacity of the target device determined by the material of the filter element of the target device, X is the absorption percentage of the target device being the degree to which the particles currently entering into the air treated by the target device are absorbed by the target device, V is the average air-flow speed of the target device, S is the area of the air contact surface of the filter element of the target device, and p is the particle concentration data being an average particle concentration data obtained by long-term statistics or statistics gathered during a particular period of time in the climate in a place in which the target device is located; and the determining of an average air-flow speed V of the target device according to the use information comprises:

determining a number of use days of the target device according to the power-on/off times of the target device;
judging whether the number of use days reaches a preset number of use days;

determining a first average air-flow speed according to acquired use information of a plurality of surrounding devices when the number of use days does not reach the preset number of use days, the surrounding devices being air purifiers of the same kind as the target device within a designated range of the target device; and

determining a second average air-flow speed according to the power-on/off times and the operating levels of the target device when the number of use days reaches the preset number of use days.

In an embodiment of the present invention, the use information of the surrounding devices comprises power-on/off times and operating levels of the surrounding devices; and

the acquiring of the first average air-flow speed according to use information of the plurality of surrounding devices includes:

determining average air-flow speeds of the respective surrounding devices according to the power-on/off times and the operating levels of the respective surrounding devices; and

acquiring an average value of the average air-flow speeds of the surrounding devices as the first average air-flow speed.

The use information further comprises operating level information; and in an embodiment of the present invention,

the determining of the second average air-flow speed according to the power-on/off times and the operating levels of the target device comprises:

calculating daily average air-flow speeds of the target device according to daily operating levels and power-on/off times of the target device in the preset number of use days; and

acquiring an average value of the daily average air-flow speeds of the target device in the preset number of use days as the second average air-flow speed.

In an embodiment of the present invention, after determining the remaining use time of the target device according to the average air-flow speed of the target device, the attribute information of the target device, and the environment data, the method further comprises:

sending prompt information to a control terminal of the target device so that the control terminal performs a prompt according to the prompt information; or,

sending prompt information to the target device so that the target device performs a prompt according to the prompt information.

The device 700 may also include a power component 726 configured to perform power management of the device 700, wired or wireless network interface(s) 750 configured to connect the device 700 to a network, and an input/output (I/O) interface 758. The device 700 may operate based on an operating system stored in the memory 732, such as Windows ServerTM, Mac OS XTM, UnixTM, LinuxTM, FreeBSDTM, or the like.

The description and embodiments are only illustrative, and the real range of the present invention is defined by the following claims.

**Claims**

1. A computer-implemented method of determining remaining use time of a filter of a target device, said target device being an air purifier, the method comprising:

acquiring (S101) use information of the target device, which comprises power-on/off times and operating levels of the target device, the different operating levels corresponding to different preset air-flow speeds;

determining (S102) an average air-flow speed of the target device according to the use information; and

determining (S103) the remaining use time of the filter of the target device according to the average air-flow speed, attribute information of the target device and environment data;

wherein the environment data comprises particle concentration data, and the attribute information comprises total absorption capacity of the target device, the absorption percentage of the target device, and the area of the air contact surface of a filter element of the target device;

the remaining use time of the filter of the target device determined according to the average air-flow speed of the target device, the attribute information of the target device, and the environment data is:

$$t = \frac{MX}{V S \rho}$$

where t is the remaining use time of the filter of the target device, M is the total absorption capacity of the target device determined by the material of the filter element of the target device, X is the absorption percentage of the target device being the degree to which the particles currently entering into the air treated by the target device are absorbed by the target device, V is the average air-flow speed of the target device, S is the area of the air contact surface of the filter element of the target device, and p is the particle concentration data being an average particle concentration data obtained by long-term statistics or statistics gathered during a particular period of time in the climate in a place in which the target device is located;
wherein the determining of an average air-flow speed V of the target device according to the use information comprises:

determining a number of use days of the target device based on the dates corresponding to the power-on/off times of the target device;
judging whether the number of use days reaches a preset number of use days;
determining a first average air-flow speed according to acquired use information of a plurality of surrounding devices when the number of use days does not reach the preset number of use days, the surrounding devices being air purifiers of the same kind as the target device within a designated range of the target device;
determining a second average air-flow speed according to the power-on/off times and the operating levels of the target device when the number of use days reaches the preset number of use days;
when the number of use days does not reach the preset number of use days, determining said first average air-flow speed as said average air-flow speed V of the target device; and
when the number of use days reaches the preset number of use days, determining said second average air-flow speed as said average air-flow speed V of the target device; and
wherein the use information of the surrounding devices comprises power-on/off times and operating levels of the surrounding devices; and
the determining of the first average air-flow speed according to use information of the plurality of surrounding devices includes:

determining average air-flow speeds of the respective surrounding devices according to the power-on/off times and the operating levels of the respective surrounding devices; and
determining an average value of the average air-flow speeds of the surrounding devices as the first average air-flow speed.

2. The computer-implemented method according to claim 1, wherein
the determining of the second average air-flow speed according to the power-on/off times and the operating levels of the target device comprises:

calculating daily average air-flow speeds of the target device according to daily operating levels and power-on/off times of the target device in the preset number of use days; and
acquiring an average value of the daily average air-flow speeds of the target device in the preset number of use days as the second average air-flow speed.

3. The computer-implemented method according to claim 1, wherein , after determining the remaining use time of the filter of the target device according to the average air-flow speed of the target device, the attribute information of the target device, and the environment data, the method further comprises:

sending prompt information to a control terminal of the target device so that the control terminal performs a prompt according to the prompt information; or,
sending prompt information to the target device so that the target device performs a prompt according to the prompt information.

4. An apparatus to determine remaining use time of a filter of a target device, said target device being an air purifier, **characterized in that**, the apparatus comprises:

an acquisition module (401) configured to acquire use information and operating levels of the target device, which comprises power-on/off times of the target device, the different operating levels corresponding to different preset air-flow speeds;

a first determination module (402) configured to determine an average air-flow speed of the target device according to the use information; and

a second determination module (403) configured to determine the remaining use time of the filter of the target device according to the average air-flow speed, attribute information of the target device, and environment data; wherein the environment data comprises particle concentration data, and the attribute information comprises total absorption capacity of the target device, the absorption percentage of the target device, and the area of the air contact surface of a filter element of the target device;

wherein the second determination module (403) is configured to determine the remaining use time, t, of the filter of the target device according to the following relation:

$$t = \frac{MX}{V\,S\rho}$$

where $t$ is the remaining use time of the filter of the target device, M is the total absorption capacity of the target device determined by the material of the filter element of the target device, X is the absorption percentage of the target device being the degree to which the particles currently entering into the air treated by the target device are absorbed by the target device, V is the average air-flow speed of the target device, S is the area of the air contact surface of the filter element of the target device, and $\rho$ is the particle concentration data being an average particle concentration data obtained by long-term statistics or statistics gathered during a particular period of time in the climate in a place in which the target device is located;

wherein the first determination module configured to determine an average air-flow speed V of the target device according to the use information comprises:

a determination unit (4021) configured to determine a number of use days of the target device based on the dates corresponding to the power-on/off times of the target device;

a judgment unit (4022) configured to judge whether the number of use days reaches a preset number of use days;

a first average-air-flow-speed determination unit (4023) configured to determine a first average air-flow speed according to acquired use information of a plurality of surrounding devices when the number of use days does not reach the preset number of use days, the surrounding devices being air purifiers of the same kind as the target device within a designated range of the target device;

a second average-air-flow-speed determination unit (4024) configured to determine a second average air-flow speed according to the power-on/off times and the operating levels of the target device when the number of use days reaches the preset number of use days; and

the first determination module is configured, when the number of use days does not reach the preset number of use days, to determine said first average air-flow speed as said average air-flow speed V of the target device and, when the number of use days reaches said preset number of use days, to determine said second average air-flow speed as said average air-flow speed V of the target device; and

wherein the use information of the surrounding devices comprises power-on/off times and operating levels of the surrounding devices; and

the first average-air-flow-speed determination unit (4023) is further configured to determine average air-flow speeds of the respective surrounding devices according to the power-on/off times and the operating levels of the respective surrounding devices, and to determine an average value of the average air-flow speeds of the surrounding devices, as the first average air-flow speed.

5. The apparatus according to claim 4, wherein:
the second average-air-flow-speed determination unit (4024) is configured to calculate daily average air-flow speeds of the target device according to daily operating levels and power-on/off times of the target device in the preset number of use days; and acquire an average value of the daily average air-flow speeds of the target device in the preset number of use days, as the second average air-flow speed.

6. The apparatus according to claim 4, wherein the apparatus further includes:

a prompt module (404) configured to send prompt information to a control terminal of the target device so that the control terminal performs a prompt according to the prompt information; or,

a prompt module (404) configured to send prompt information to the target device so that the target device performs a prompt according to the prompt information.

7. The apparatus according to claim 4 , comprising:

a processor; and
an instruction executable by the processor;
wherein the processor is configured to execute the instructions to perform:

acquiring of use information of the target device, which comprises power-on/off times and operating levels of the target device, the different operating levels corresponding to different preset air-flow speeds;
determining of an average air-flow speed of the target device according to the use information; and
determining of the remaining use time of the filter of the target device according to the average air-flow speed, attribute information of the target device and environment data;
wherein the environment data comprises particle concentration data, and the attribute information comprises total absorption capacity of the target device, the absorption percentage of the target device, and the area of the air contact surface of a filter element of the target device;
the remaining use time of the filter of the target device determined according to the average air-flow speed of the target device, the attribute information of the target device, and the environment data is:

$$t = \frac{MX}{V S \rho}$$

where $t$ is the remaining use time of the filter of the target device, M is the total absorption capacity of the target device determined by the material of the filter element of the target device, X is the absorption percentage of the target device being the degree to which the particles currently entering into the air treated by the target device are absorbed by the target device, V is the average air-flow speed of the target device, S is the area of the air contact surface of the filter element of the target device, and p is the particle concentration data being an average particle concentration data obtained by long-term statistics or statistics gathered during a particular period of time in the climate in a place in which the target device is located;
wherein the processor is configured to perform the determining of an average air-flow speed V of the target device according to the use information by:

determining a number of use days of the target device based on the dates corresponding to the power-on/off times of the target device;
judging whether the number of use days reaches a preset number of use days;
determining a first average air-flow speed according to acquired use information of a plurality of surrounding devices when the number of use days does not reach the preset number of use days, the surrounding devices being air purifiers of the same kind as the target device within a designated range of the target device;
determining a second average air-flow speed according to the power-on/off times and the operating levels of the target device when the number of use days reaches the preset number of use days;
when the number of use days does not reach the preset number of use days, determining said first average air-flow speed as said average air-flow speed V of the target device; and
when the number of use days reaches the preset number of use days, determining said second average air-flow speed as said average air-flow speed V of the target device; and
wherein the use information of the surrounding devices comprises power-on/off times and operating levels of the surrounding devices; and
the determining of the first average air-flow speed according to use information of the plurality of surrounding devices includes:

determining average air-flow speeds of the respective surrounding devices according to the power-on/off times and the operating levels of the respective surrounding devices; and
determining an average value of the average air-flow speeds of the surrounding devices as the

EP 3 040 948 B1

first average air-flow speed.

8. A computer program stored on a computer usable medium, comprising computer-readable program means for causing an intelligent terminal to implement the method according to any one of claims 1 to 3.

**Patentansprüche**

1. Computerimplementiertes Verfahren zum Bestimmen der verbleibenden Benutzungszeit eines Filters einer Zielvorrichtung, wobei die Zielvorrichtung ein Luftreiniger ist, wobei das Verfahren umfasst:

Erfassen (S101) von Nutzungsinformationen der Zielvorrichtung, die Ein-/Ausschaltzeiten und Betriebsniveaus der Zielvorrichtung umfassen, wobei die verschiedenen Betriebsniveaus verschiedenen voreingestellten Luftströmungsgeschwindigkeiten entsprechen,
Bestimmen (S102) einer durchschnittlichen Luftströmungsgeschwindigkeit der Zielvorrichtung gemäß den Nutzungsinformationen und
Bestimmen (S103) der verbleibenden Nutzungszeit des Filters der Zielvorrichtung anhand von der durchschnittlichen Luftströmungsgeschwindigkeit, Attributinformationen der Zielvorrichtung und Umgebungsdaten,
wobei die Umgebungsdaten Partikelkonzentrationsdaten umfassen und die Attributinformationen die Gesamtabsorptionskapazität der Zielvorrichtung, den Absorptionsprozentsatz der Zielvorrichtung und die Fläche der Luftkontaktfläche eines Filterelements der Zielvorrichtung umfassen,
wobei die verbleibende Nutzungszeit des Filters der Zielvorrichtung, die anhand der durchschnittlichen Luftströmungsgeschwindigkeit der Zielvorrichtung, der Attributinformationen der Zielvorrichtung und der Umgebungsdaten bestimmt wird, ist:

$$t = \frac{MX}{V\,S\rho}$$

wobei t die verbleibende Nutzungszeit des Filters der Zielvorrichtung ist, M die Gesamtabsorptionskapazität der Zielvorrichtung ist, die durch das Material des Filterelements der Zielvorrichtung bestimmt wird, X der Absorptionsprozentsatz der Zielvorrichtung ist, was der Grad ist, in dem die Partikel, die gegenwärtig in die von der Zielvorrichtung behandelte Luft eintreten, von der Zielvorrichtung absorbiert werden, V die durchschnittliche Luftströmungsgeschwindigkeit der Zielvorrichtung ist, S die Fläche der Luftkontaktfläche des Filterelements der Zielvorrichtung ist und p die Partikelkonzentrationsdaten sind, was die durchschnittliche Partikelkonzentrationsdaten sind, die durch Langzeitstatistiken oder Statistiken erhalten werden, die während eines bestimmten Zeitraums im Klima an einem Ort, an dem sich die Zielvorrichtung befindet, gesammelt wurden,
wobei das Bestimmen einer durchschnittlichen Luftströmungsgeschwindigkeit V der Zielvorrichtung gemäß den Nutzungsinformationen umfasst:

Bestimmen einer Anzahl von Nutzungstagen der Zielvorrichtung auf der Grundlage der Daten, die den Ein-/Ausschaltzeiten der Zielvorrichtung entsprechen,
Beurteilen, ob die Anzahl der Nutzungstage eine voreingestellte Anzahl von Nutzungstagen erreicht,
Bestimmen einer ersten durchschnittlichen Luftströmungsgeschwindigkeit gemäß den erfassten Nutzungsinformationen einer Vielzahl von umgebenden Vorrichtungen, wenn die Anzahl der Nutzungstage die voreingestellte Anzahl von Nutzungstagen nicht erreicht, wobei die umgebenden Vorrichtungen Luftreiniger der gleichen Art wie die Zielvorrichtung innerhalb eines bestimmten Bereichs der Zielvorrichtung sind,
Bestimmen einer zweiten durchschnittlichen Luftströmungsgeschwindigkeit in Abhängigkeit von den Ein-/Ausschaltzeiten und den Betriebsniveaus der Zielvorrichtung, wenn die Anzahl der Nutzungstage die voreingestellte Anzahl von Nutzungstagen erreicht,
wenn die Anzahl der Nutzungstage die voreingestellte Anzahl von Nutzungstagen nicht erreicht, Bestimmen der ersten durchschnittlichen Luftströmungsgeschwindigkeit als durchschnittliche Luftströmungsgeschwindigkeit V der Zielvorrichtung, und
wenn die Anzahl der Nutzungstage die voreingestellte Anzahl von Nutzungstagen erreicht, Bestimmen der zweiten durchschnittlichen Luftströmungsgeschwindigkeit als die durchschnittliche Luftströmungsgeschwindigkeit V der Zielvorrichtung, und
wobei die Nutzungsinformationen der umgebenden Vorrichtungen Ein-/Ausschaltzeiten und Betriebsni-

17

veaus der umgebenden Vorrichtungen umfassen, und
das Bestimmen der ersten durchschnittlichen Luftstromgeschwindigkeit gemäß den Nutzungsinformationen der Vielzahl der umgebenden Vorrichtungen umfasst:

Bestimmen der durchschnittlichen Luftströmungsgeschwindigkeiten der jeweiligen umgebenden Vorrichtungen in Abhängigkeit von den Ein-/Ausschaltzeiten und den Betriebsniveaus der jeweiligen umgebenden Vorrichtungen und
Bestimmen eines Mittelwertes der mittleren Luftströmungsgeschwindigkeiten der umgebenden Vorrichtungen als erste mittlere Luftströmungsgeschwindigkeit.

2. Computerimplementiertes Verfahren nach Anspruch 1, wobei
das Bestimmen der zweiten mittleren Luftstromgeschwindigkeit in Abhängigkeit von den Ein-/Ausschaltzeiten und den Betriebsniveaus der Zielvorrichtung umfasst:

Berechnen der täglichen durchschnittlichen Luftströmungsgeschwindigkeiten der Zielvorrichtung gemäß den täglichen Betriebsniveaus und den Ein- und Ausschaltzeiten der Zielvorrichtung in der voreingestellten Anzahl von Nutzungstagen, und
Erfassen eines Mittelwertes der täglichen durchschnittlichen Luftstromgeschwindigkeiten der Zielvorrichtung in der voreingestellten Anzahl von Nutzungstagen als zweite durchschnittliche Luftstromgeschwindigkeit.

3. Computerimplementiertes Verfahren nach Anspruch 1, wobei das Verfahren nach dem Bestimmen der verbleibenden Benutzungszeit des Filters der Zielvorrichtung gemäß der durchschnittlichen Luftströmungsgeschwindigkeit der Zielvorrichtung, den Attributinformationen der Zielvorrichtung und den Umgebungsdaten ferner umfasst:

Senden von Prompt-Informationen an ein Steuerterminal der Zielvorrichtung, so dass das Steuerterminal eine Aufforderung entsprechend den Prompt-Informationen ausführt, oder
Senden von Prompt-Informationen an die Zielvorrichtung, so dass die Zielvorrichtung eine Aufforderung gemäß den Prompt-Informationen ausführt.

4. Vorrichtung zum Bestimmen der verbleibenden Benutzungszeit eines Filters einer Zielvorrichtung, wobei die Zielvorrichtung ein Luftreiniger ist, **dadurch gekennzeichnet, dass** die Vorrichtung umfasst:

ein Erfassungsmodul (401), das dazu konfiguriert ist, Nutzungsinformationen und Betriebsniveaus der Zielvorrichtung zu erfassen, die Ein-/Ausschaltzeiten der Zielvorrichtung umfassten wobei die verschiedenen Betriebsniveaus verschiedenen voreingestellten Luftströmungsgeschwindigkeiten entsprechen,
ein erstes Bestimmungsmodul (402), das dazu konfiguriert ist, eine durchschnittliche Luftströmungsgeschwindigkeit der Zielvorrichtung gemäß den Nutzungsinformationen zu bestimmen, und
ein zweites Bestimmungsmodul (403), das dazu konfiguriert ist, die verbleibende Nutzungszeit des Filters der Zielvorrichtung anhand von der durchschnittlichen Luftströmungsgeschwindigkeit, Attributinformationen der Zielvorrichtung und Umgebungsdaten zu bestimmen,
wobei die Umgebungsdaten Partikelkonzentrationsdaten umfassen und die Attributinformationen die Gesamtabsorptionskapazität der Zielvorrichtung, den Absorptionsprozentsatz der Zielvorrichtung und die Fläche der Luftkontaktfläche eines Filterelements der Zielvorrichtung umfassen,
wobei das zweite Bestimmungsmodul (403) dazu konfiguriert ist, die verbleibende Nutzungszeit t des Filters der Zielvorrichtung gemäß der folgenden Beziehung zu bestimmen:

$$t = \frac{MX}{V S \rho}$$

wobei t die verbleibende Nutzungszeit des Filters der Zielvorrichtung ist, M die Gesamtabsorptionskapazität der Zielvorrichtung ist, die durch das Material des Filterelements der Zielvorrichtung bestimmt wird, X der Absorptionsprozentsatz der Zielvorrichtung ist, was der Grad ist, in dem die Partikel, die gegenwärtig in die von der Zielvorrichtung behandelte Luft eintreten, von der Zielvorrichtung absorbiert werden, V die durchschnittliche Luftströmungsgeschwindigkeit der Zielvorrichtung ist, S die Fläche der Luftkontaktfläche des Filterelements der Zielvorrichtung ist und p die Partikelkonzentrationsdaten sind, was die durchschnittliche Partikelkonzentrationsdaten sind, die durch Langzeitstatistiken oder Statistiken erhalten werden, die während eines bestimmten Zeitraums im Klima an einem Ort, an dem sich die Zielvorrichtung befindet, gesammelt wurden, wobei das erste Bestimmungsmodul, das dazu konfiguriert ist, eine durchschnittliche Luftströmungsgeschwindigkeit V der Zielvorrichtung gemäß den Nutzungsinformationen zu bestimmen, umfasst:

eine Bestimmungseinheit (4021), die dazu konfiguriert ist, eine Anzahl von Nutzungstagen der Zielvorrichtung auf der Grundlage der Daten zu bestimmen, die den Ein-/Ausschaltzeiten der Zielvorrichtung entsprechen,

eine Beurteilungseinheit (4022), die dazu konfiguriert ist, zu beurteilen, ob die Anzahl der Nutzungstage eine voreingestellte Anzahl von Nutzungstagen erreicht,

eine erste Einheit (4023) zur Bestimmung der durchschnittlichen Luftströmungsgeschwindigkeit, die dazu konfiguriert ist, eine erste durchschnittliche Luftströmungsgeschwindigkeit gemäß erfassten Nutzungsinformationen einer Vielzahl von umgebenden Vorrichtungen zu bestimmen, wenn die Anzahl von Nutzungstagen die voreingestellte Anzahl von Nutzungstagen nicht erreicht, wobei die umgebenden Vorrichtungen Luftreiniger derselben Art wie die Zielvorrichtung innerhalb eines bestimmten Bereichs der Zielvorrichtung sind,

eine zweite Einheit zur Bestimmung der durchschnittlichen Luftströmungsgeschwindigkeit (4024), die dazu konfiguriert ist, eine zweite durchschnittliche Luftströmungsgeschwindigkeit gemäß den Ein-/Ausschaltzeiten und den Betriebsniveaus der Zielvorrichtung zu bestimmen, wenn die Anzahl der Nutzungstage die voreingestellte Anzahl von Nutzungstagen erreicht, und

das erste Bestimmungsmodul dazu konfiguriert ist, wenn die Anzahl der Nutzungstage die voreingestellte Anzahl von Nutzungstagen nicht erreicht, die erste mittlere Luftströmungsgeschwindigkeit als die mittlere Luftströmungsgeschwindigkeit V der Zielvorrichtung zu bestimmen und, wenn die Anzahl der Nutzungstage die voreingestellte Anzahl von Nutzungstagen erreicht, die zweite mittlere Luftströmungsgeschwindigkeit als die mittlere Luftströmungsgeschwindigkeit V der Zielvorrichtung zu bestimm, und

wobei die Nutzungsinformationen der umgebenden Vorrichtungen Ein-/Ausschaltzeiten und Betriebsniveaus der umgebenden Vorrichtungen umfassen, und

die erste Einheit zur Bestimmung der durchschnittlichen Luftströmungsgeschwindigkeit (4023) ferner dazu konfiguriert ist, durchschnittliche Luftströmungsgeschwindigkeiten der jeweiligen umgebenden Vorrichtungen gemäß den Ein-/Ausschaltzeiten und den Betriebsniveaus der jeweiligen umgebenden Vorrichtungen zu bestimmen und einen Durchschnittswert der durchschnittlichen Luftströmungsgeschwindigkeiten der umgebenden Vorrichtungen als erste durchschnittliche Luftströmungsgeschwindigkeit zu bestimmen.

5. Vorrichtung nach Anspruch 4, wobei:
die zweite Einheit zur Bestimmung der durchschnittlichen Luftströmungsgeschwindigkeit (4024) dazu konfiguriert ist, die täglichen durchschnittlichen Luftströmungsgeschwindigkeiten der Zielvorrichtung gemäß den täglichen Betriebsniveaus und den Ein-/Ausschaltzeiten der Zielvorrichtung in der voreingestellten Anzahl von Nutzungstagen zu berechnen, und einen Durchschnittswert der täglichen durchschnittlichen Luftströmungsgeschwindigkeiten der Zielvorrichtung in der voreingestellten Anzahl von Nutzungstagen als zweite durchschnittliche Luftströmungsgeschwindigkeit zu erfassen.

6. Vorrichtung nach Anspruch 4, wobei die Vorrichtung ferner umfasst:

ein Prompt-Modul (404), das dazu konfiguriert ist, Prompt-Informationen an ein Steuerterminal der Zielvorrichtung zu senden, so dass das Steuerterminal eine Aufforderung entsprechend den Prompt-Informationen ausführt, oder,

ein Prompt-Modul (404), das dazu konfiguriert ist, Prompt-Informationen an die Zielvorrichtung zu senden, so dass die Zielvorrichtung gemäß den Prompt-Informationen eine Aufforderung ausführt.

7. Vorrichtung nach Anspruch 4, umfassend:

einen Prozessor und
eine durch den Prozessor ausführbare Anweisung,
wobei der Prozessor dazu konfiguriert ist, die Anweisungen auszuführen, um durchzuführen:

Erfassen von Nutzungsinformationen der Zielvorrichtung, die Ein-/Ausschaltzeiten und Betriebsniveaus der Zielvorrichtung umfassen, wobei die verschiedenen Betriebsniveaus verschiedenen voreingestellten Luftströmungsgeschwindigkeiten entsprechen,

Bestimmen einer durchschnittlichen Luftströmungsgeschwindigkeit der Zielvorrichtung gemäß den Nutzungsinformationen und

Bestimmen der Restnutzungszeit des Filters der Zielvorrichtung anhand von den durchschnittlichen Luftströmungsgeschwindigkeit, Attributinformationen der Zielvorrichtung und Umgebungsdaten,

wobei die Umgebungsdaten Partikelkonzentrationsdaten umfassen und die Attributinformationen die Gesamtabsorptionskapazität der Zielvorrichtung, den Absorptionsprozentsatz der Zielvorrichtung und die Fläche der Luftkontaktfläche eines Filterelements der Zielvorrichtung umfassen,

wobei die verbleibende Nutzungszeit des Filters der Zielvorrichtung, die anhand der durchschnittlichen Luftströmungsgeschwindigkeit der Zielvorrichtung, der Attributinformationen der Zielvorrichtung und der Umgebungsdaten bestimmt wird, ist:

$$t = \frac{MX}{V\,S\rho}$$

wobei t die verbleibende Nutzungszeit des Filters der Zielvorrichtung ist, M die Gesamtabsorptionskapazität der Zielvorrichtung ist, die durch das Material des Filterelements der Zielvorrichtung bestimmt wird, X der Absorptionsprozentsatz der Zielvorrichtung ist, was der Grad ist, in dem die Partikel, die gegenwärtig in die von der Zielvorrichtung behandelte Luft eintreten, von der Zielvorrichtung absorbiert werden, V die durchschnittliche Luftströmungsgeschwindigkeit der Zielvorrichtung ist, S die Fläche der Luftkontaktfläche des Filterelements der Zielvorrichtung ist und p die Partikelkonzentrationsdaten sind, was die durchschnittliche Partikelkonzentrationsdaten sind, die durch Langzeitstatistiken oder Statistiken erhalten werden, die während eines bestimmten Zeitraums im Klima an einem Ort, an dem sich die Zielvorrichtung befindet, gesammelt wurden,

wobei der Prozessor dazu konfiguriert ist, die Bestimmung einer durchschnittlichen Luftstromgeschwindigkeit V der Zielvorrichtung gemäß der Nutzungsinformationen auszuführen durch:

Bestimmen einer Anzahl von Nutzungstagen der Zielvorrichtung auf der Grundlage der Daten, die den Ein-/Ausschaltzeiten der Zielvorrichtung entsprechen,

Beurteilen, ob die Anzahl der Nutzungstage eine voreingestellte Anzahl von Nutzungstagen erreicht,

Bestimmen einer ersten durchschnittlichen Luftströmungsgeschwindigkeit gemäß den erfassten Nutzungsinformationen einer Vielzahl von umgebenden Vorrichtungen, wenn die Anzahl der Nutzungstage die voreingestellte Anzahl von Nutzungstagen nicht erreicht, wobei die umgebenden Vorrichtungen Luftreiniger der gleichen Art wie die Zielvorrichtung innerhalb eines bestimmten Bereichs der Zielvorrichtung sind,

Bestimmen einer zweiten durchschnittlichen Luftströmungsgeschwindigkeit in Abhängigkeit von den Ein-/Ausschaltzeiten und den Betriebsniveaus der Zielvorrichtung, wenn die Anzahl der Nutzungstage die voreingestellte Anzahl von Nutzungstagen erreicht,

wenn die Anzahl der Nutzungstage die voreingestellte Anzahl von Nutzungstagen nicht erreicht, Bestimmen der ersten durchschnittlichen Luftströmungsgeschwindigkeit als durchschnittliche Luftströmungsgeschwindigkeit V der Zielvorrichtung, und

wenn die Anzahl der Nutzungstage die voreingestellte Anzahl von Nutzungstagen erreicht, Bestimmen der zweiten durchschnittlichen Luftströmungsgeschwindigkeit als die durchschnittliche Luftströmungsgeschwindigkeit V der Zielvorrichtung, und

wobei die Nutzungsinformationen der umgebenden Vorrichtungen Ein-/Ausschaltzeiten und Betriebsniveaus der umgebenden Vorrichtungen umfassen und

das Bestimmen der ersten durchschnittlichen Luftstromgeschwindigkeit gemäß den Nutzungsinformationen der Vielzahl der umgebenden Vorrichtungen umfasst:

Bestimmen der durchschnittlichen Luftströmungsgeschwindigkeiten der jeweiligen umgebenden Vorrichtungen in Abhängigkeit von den Ein-/Ausschaltzeiten und den Betriebsniveaus der jeweiligen umgebenden Vorrichtungen und

Bestimmen eines Mittelwertes der mittleren Luftströmungsgeschwindigkeiten der umgebenden Vorrichtungen als erste mittlere Luftströmungsgeschwindigkeit.

8. Computerprogramm, das auf einem computerverwendbaren Medium gespeichert ist, mit computerlesbaren Programmmitteln, um ein intelligentes Terminal zu veranlassen, das Verfahren gemäß einem der Ansprüche 1 bis 3 zu implementieren.

**Revendications**

1. Procédé mis en œuvre par ordinateur de détermination d'un temps d'utilisation restant d'un filtre d'un dispositif cible, ledit dispositif cible étant un purificateur d'air, le procédé comprenant :

l'acquisition (S101) d'informations d'utilisation du dispositif cible, qui comprennent des temps de mise sous/hors tension et des niveaux de fonctionnement du dispositif cible, les différents niveaux de fonctionnement correspondant à différentes vitesses d'écoulement d'air prédéfinies ;
la détermination (S102) d'une vitesse d'écoulement d'air moyenne du dispositif cible selon les informations d'utilisation ; et
la détermination (S103) du temps d'utilisation restant du filtre du dispositif cible selon la vitesse d'écoulement d'air moyenne, des informations d'attribut du dispositif cible et des données d'environnement ;
dans lequel les données d'environnement comprennent des données de concentration de particules, et les informations d'attribut comprennent une capacité d'absorption totale du dispositif cible, le pourcentage d'absorption du dispositif cible, et l'aire de la surface de contact d'air d'un élément de filtre du dispositif cible ;
le temps d'utilisation restant du filtre du dispositif cible déterminé selon la vitesse d'écoulement d'air moyenne du dispositif cible, les informations d'attribut du dispositif cible, et les données d'environnement est :

$$ t = \frac{MX}{V\,S\rho} $$

où t est le temps d'utilisation restant du filtre du dispositif cible, M est la capacité d'absorption totale du dispositif cible déterminée par le matériau de l'élément de filtre du dispositif cible, X est le pourcentage d'absorption du dispositif cible qui est le degré auquel les particules entrant actuellement dans l'air traité par le dispositif cible sont absorbées par le dispositif cible, V est la vitesse d'écoulement d'air moyenne du dispositif cible, S est l'aire de la surface de contact d'air de l'élément de filtre du dispositif cible, et p est les données de concentration de particules qui sont des données de concentration de particules moyennes obtenues par des statistiques à long terme ou des statistiques collectées pendant une période de temps particulière dans le climat dans un endroit dans lequel le dispositif cible est situé ;
dans lequel la détermination d'une vitesse d'écoulement d'air moyenne V du dispositif cible selon les informations d'utilisation comprend :

la détermination d'un nombre de jours d'utilisation du dispositif cible sur la base des dates correspondant aux temps de mise sous/hors tension du dispositif cible ;
le jugement de si le nombre de jours d'utilisation atteint un nombre prédéfini de jours d'utilisation ;
la détermination d'une première vitesse d'écoulement d'air moyenne selon des informations d'utilisation acquises d'une pluralité de dispositifs environnants lorsque le nombre de jours d'utilisation n'atteint pas le nombre prédéfini de jours d'utilisation, les dispositifs environnants étant des purificateurs d'air du même type que le dispositif cible dans une portée désignée du dispositif cible ;
la détermination d'une seconde vitesse d'écoulement d'air moyenne selon les temps de mise sous/hors tension et les niveaux de fonctionnement du dispositif cible lorsque le nombre de jours d'utilisation atteint le nombre prédéfini de jours d'utilisation ;
lorsque le nombre de jours d'utilisation n'atteint pas le nombre prédéfini de jours d'utilisation, la détermination de ladite première vitesse d'écoulement d'air moyenne comme ladite vitesse d'écoulement d'air moyenne V du dispositif cible ; et
lorsque le nombre de jours d'utilisation atteint le nombre prédéfini de jours d'utilisation, la détermination de ladite seconde vitesse d'écoulement d'air moyenne comme ladite vitesse d'écoulement d'air moyenne V du dispositif cible ; et
dans lequel les informations d'utilisation des dispositifs environnants comprennent des temps de mise sous/hors tension et des niveaux de fonctionnement des dispositifs environnants ; et
la détermination de la première vitesse d'écoulement d'air moyenne selon des informations d'utilisation de la pluralité de dispositifs environnants inclut :

la détermination de vitesses d'écoulement d'air moyennes des dispositifs environnants respectifs selon les temps de mise sous/hors tension et les niveaux de fonctionnement des dispositifs environnants respectifs ; et

la détermination d'une valeur moyenne des vitesses d'écoulement d'air moyennes des dispositifs environnants comme la première vitesse d'écoulement d'air moyenne.

2. Procédé mis en œuvre par ordinateur selon la revendication 1, dans lequel
la détermination de la seconde vitesse d'écoulement d'air moyenne selon les temps de mise sous/hors tension et les niveaux de fonctionnement du dispositif cible comprend :

le calcul de vitesses d'écoulement d'air moyennes quotidiennes du dispositif cible selon des niveaux de fonctionnement et des temps de mise sous/hors tension quotidiens du dispositif cible dans le nombre prédéfini de jours d'utilisation ; et
l'acquisition d'une valeur moyenne des vitesses d'écoulement d'air moyennes quotidiennes du dispositif cible dans le nombre prédéfini de jours d'utilisation comme la seconde vitesse d'écoulement d'air moyenne.

3. Procédé mis en œuvre par ordinateur selon la revendication 1, dans lequel, après la détermination du temps d'utilisation restant du filtre du dispositif cible selon la vitesse d'écoulement d'air moyenne du dispositif cible, les informations d'attribut du dispositif cible, et les données d'environnement, le procédé comprend en outre :

l'envoi d'informations d'invite à un terminal de commande du dispositif cible de sorte que le terminal de commande effectue une invite selon les informations d'invite ; ou,
l'envoi d'informations d'invite au dispositif cible de sorte que le dispositif cible effectue une invite selon les informations d'invite.

4. Appareil pour déterminer un temps d'utilisation restant d'un filtre d'un dispositif cible, ledit dispositif cible étant un purificateur d'air, **caractérisé en ce que**, l'appareil comprend :

un module d'acquisition (401) configuré pour acquérir des informations d'utilisation et des niveaux de fonctionnement du dispositif cible, qui comprennent des temps de mise sous/hors tension du dispositif cible, les différents niveaux de fonctionnement correspondant à différentes vitesses d'écoulement d'air prédéfinies ;
un premier module de détermination (402) configuré pour déterminer une vitesse d'écoulement d'air moyenne du dispositif cible selon les informations d'utilisation ; et
un second module de détermination (403) configuré pour déterminer le temps d'utilisation restant du filtre du dispositif cible selon la vitesse d'écoulement d'air moyenne, des informations d'attribut du dispositif cible, et des données d'environnement ;
dans lequel les données d'environnement comprennent des données de concentration de particules, et les informations d'attribut comprennent une capacité d'absorption totale du dispositif cible, le pourcentage d'absorption du dispositif cible, et l'aire de la surface de contact d'air d'un élément de filtre du dispositif cible ;
dans lequel le second module de détermination (403) est configuré pour déterminer le temps d'utilisation restant, t, du filtre du dispositif cible selon la relation suivante :

$$ t = \frac{MX}{VS\rho} $$

où t est le temps d'utilisation restant du filtre du dispositif cible, M est la capacité d'absorption totale du dispositif cible déterminée par le matériau de l'élément de filtre du dispositif cible, X est le pourcentage d'absorption du dispositif cible qui est le degré auquel les particules entrant actuellement dans l'air traité par le dispositif cible sont absorbées par le dispositif cible, V est la vitesse d'écoulement d'air moyenne du dispositif cible, S est l'aire de la surface de contact d'air de l'élément de filtre du dispositif cible, et p est les données de concentration de particules qui sont des données de concentration de particules moyennes obtenues par des statistiques à long terme ou des statistiques collectées pendant une période de temps particulière dans le climat dans un endroit dans lequel le dispositif cible est situé ;
dans lequel le premier module de détermination configuré pour déterminer une vitesse d'écoulement d'air moyenne V du dispositif cible selon les informations d'utilisation comprend :

une unité de détermination (4021) configurée pour déterminer un nombre de jours d'utilisation du dispositif cible sur la base des dates correspondant aux temps de mise sous/hors tension du dispositif cible ;
une unité de jugement (4022) configurée pour juger si le nombre de jours d'utilisation atteint un nombre prédéfini de jours d'utilisation ;

une première unité de détermination de vitesse d'écoulement d'air moyenne (4023) configurée pour déterminer une première vitesse d'écoulement d'air moyenne selon des informations d'utilisation acquises d'une pluralité de dispositifs environnants lorsque le nombre de jours d'utilisation n'atteint pas le nombre prédéfini de jours d'utilisation, les dispositifs environnants étant des purificateurs d'air du même type que le dispositif cible dans une portée désignée du dispositif cible ;

une seconde unité de détermination de vitesse d'écoulement d'air moyenne (4024) configurée pour déterminer une seconde vitesse d'écoulement d'air moyenne selon les temps de mise sous/hors tension et les niveaux de fonctionnement du dispositif cible lorsque le nombre de jours d'utilisation atteint le nombre prédéfini de jours d'utilisation ; et

le premier module de détermination est configuré, lorsque le nombre de jours d'utilisation n'atteint pas le nombre prédéfini de jours d'utilisation, pour déterminer ladite première vitesse d'écoulement d'air moyenne comme ladite vitesse d'écoulement d'air moyenne V du dispositif cible et, lorsque le nombre de jours d'utilisation atteint ledit nombre prédéfini de jours d'utilisation, pour déterminer ladite seconde vitesse d'écoulement d'air moyenne comme ladite vitesse d'écoulement d'air moyenne V du dispositif cible ; et

dans lequel les informations d'utilisation des dispositifs environnants comprennent des temps de mise sous/hors tension et des niveaux de fonctionnement des dispositifs environnants ; et

la première unité de détermination de vitesse d'écoulement d'air moyenne (4023) est en outre configurée pour déterminer des vitesses d'écoulement d'air moyennes des dispositifs environnants respectifs selon les temps de mise sous/hors tension et les niveaux de fonctionnement des dispositifs environnants respectifs, et pour déterminer une valeur moyenne des vitesses d'écoulement d'air moyennes des dispositifs environnants, comme la première vitesse d'écoulement d'air moyenne.

5. Appareil selon la revendication 4, dans lequel :

la seconde unité de détermination de vitesse d'écoulement d'air moyenne (4024) est configurée pour calculer des vitesses d'écoulement d'air moyennes quotidiennes du dispositif cible selon des niveaux de fonctionnement et des temps de mise sous/hors tension quotidiens du dispositif cible dans le nombre prédéfini de jours d'utilisation ; et acquérir une valeur moyenne des vitesses d'écoulement d'air moyennes quotidiennes du dispositif cible dans le nombre prédéfini de jours d'utilisation, comme la seconde vitesse d'écoulement d'air moyenne.

6. Appareil selon la revendication 4, dans lequel l'appareil inclut en outre :

un module d'invite (404) configuré pour envoyer des informations d'invite à un terminal de commande du dispositif cible de sorte que le terminal de commande effectue une invite selon les informations d'invite ; ou,
un module d'invite (404) configuré pour envoyer des informations d'invite au dispositif cible de sorte que le dispositif cible effectue une invite selon les informations d'invite.

7. Appareil selon la revendication 4, comprenant :

un processeur ; et
une instruction exécutable par le processeur ;
dans lequel le processeur est configuré pour exécuter les instructions pour effectuer :

l'acquisition d'informations d'utilisation du dispositif cible, qui comprennent des temps de mise sous/hors tension et des niveaux de fonctionnement du dispositif cible, les différents niveaux de fonctionnement correspondant à différentes vitesses d'écoulement d'air prédéfinies ;
la détermination d'une vitesse d'écoulement d'air moyenne du dispositif cible selon les informations d'utilisation ; et
la détermination du temps d'utilisation restant du filtre du dispositif cible selon la vitesse d'écoulement d'air moyenne, des informations d'attribut du dispositif cible et des données d'environnement ;
dans lequel les données d'environnement comprennent des données de concentration de particules, et les informations d'attribut comprennent une capacité d'absorption totale du dispositif cible, le pourcentage d'absorption du dispositif cible, et l'aire de la surface de contact d'air d'un élément de filtre du dispositif cible ;
le temps d'utilisation restant du filtre du dispositif cible déterminé selon la vitesse d'écoulement d'air moyenne du dispositif cible, les informations d'attribut du dispositif cible, et les données d'environnement est :

$$t = \frac{MX}{V\,S\rho}$$

où t est le temps d'utilisation restant du filtre du dispositif cible, M est la capacité d'absorption totale du dispositif cible déterminée par le matériau de l'élément de filtre du dispositif cible, X est le pourcentage d'absorption du dispositif cible qui est le degré auquel les particules entrant actuellement dans l'air traité par le dispositif cible sont absorbées par le dispositif cible, V est la vitesse d'écoulement d'air moyenne du dispositif cible, S est l'aire de la surface de contact d'air de l'élément de filtre du dispositif cible, et p est les données de concentration de particules qui sont des données de concentration de particules moyennes obtenues par des statistiques à long terme ou des statistiques collectées pendant une période de temps particulière dans le climat dans un endroit dans lequel le dispositif cible est situé ;

dans lequel le processeur est configuré pour effectuer la détermination d'une vitesse d'écoulement d'air moyenne V du dispositif cible selon les informations d'utilisation en :

déterminant un nombre de jours d'utilisation du dispositif cible sur la base des dates correspondant aux temps de mise sous/hors tension du dispositif cible ;

jugeant si le nombre de jours d'utilisation atteint un nombre prédéfini de jours d'utilisation ;

déterminant une première vitesse d'écoulement d'air moyenne selon des informations d'utilisation acquises d'une pluralité de dispositifs environnants lorsque le nombre de jours d'utilisation n'atteint pas le nombre prédéfini de jours d'utilisation, les dispositifs environnants étant des purificateurs d'air du même type que le dispositif cible dans une portée désignée du dispositif cible ;

déterminant une seconde vitesse d'écoulement d'air moyenne selon les temps de mise sous/hors tension et les niveaux de fonctionnement du dispositif cible lorsque le nombre de jours d'utilisation atteint le nombre prédéfini de jours d'utilisation ;

lorsque le nombre de jours d'utilisation n'atteint pas le nombre prédéfini de jours d'utilisation, déterminant ladite première vitesse d'écoulement d'air moyenne comme ladite vitesse d'écoulement d'air moyenne V du dispositif cible ; et

lorsque le nombre de jours d'utilisation atteint le nombre prédéfini de jours d'utilisation, déterminant ladite seconde vitesse d'écoulement d'air moyenne comme ladite vitesse d'écoulement d'air moyenne V du dispositif cible ; et

dans lequel les informations d'utilisation des dispositifs environnants comprennent des temps de mise sous/hors tension et des niveaux de fonctionnement des dispositifs environnants ; et

la détermination de la première vitesse d'écoulement d'air moyenne selon des informations d'utilisation de la pluralité de dispositifs environnants inclut :

la détermination de vitesses d'écoulement d'air moyennes des dispositifs environnants respectifs selon les temps de mise sous/hors tension et les niveaux de fonctionnement des dispositifs environnants respectifs ; et

la détermination d'une valeur moyenne des vitesses d'écoulement d'air moyennes des dispositifs environnants comme la première vitesse d'écoulement d'air moyenne.

8. Programme informatique stocké sur un support utilisable par ordinateur, comprenant des moyens de programme lisibles par ordinateur pour amener un terminal intelligent à mettre en œuvre le procédé selon l'une quelconque des revendications 1 à 3.

acquiring use information of a target device, which includes power-on/off times of the target device

S101

determining an average air flow speed of the target device according to the use information

S102

determining the remaining use time of the target device according to the average air flow speed, attribute information of the target device and environment data

S103

Fig.1

S

Fig.2

The server acquires use information of a target device

S301

The server determines the average air flow speed of the target device according to the use information

S302

the server determines the remaining use time according to the average air flow speed of the target device, the attribute information of the target device, and the environment data

S303

the server may perform a prompt according to the remaining use time of the target device

S304

Fig.3

Apparatus to determine
remaining use time

acquisition
module

401

first
determination
module

402

second
determination
module

403

Fig.4

first determination module

determination
unit
4021

judgment unit
4022

first acquisition
unit
4023

second
acquisition unit
4024

Fig.5

apparatus to determine
remaining use time

acquisition
module
401

first
determination
module
402

second
determination
module
403

prompt module
404

Fig.6

EP 3 040 948 B1

**700**

722 — processing component

power component — 726

732 — memory

network interface — 750

I/O interface — 758

Fig.7

28

**EP 3 040 948 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6036757 A

- WO 2012066453 A